# FASCICULE DE BREVET EUROPEEN

(11) **EP 2 379 780 B1**
(45) Date de publication et mention de la délivrance du brevet: **18.06.2014**
(21) Numéro de dépôt: 09805786.2
(22) Date de dépôt: 23.12.2009
(51) Int. Cl.: C25B 11/04, C25B 9/00, C25B 1/04

(54) **NOUVEAU PROCÉDÉ ÉLECTROCHIMIQUE POUR LA PRODUCTION D'HYDROGÈNE ET DISPOSITIF POUR SA MISE EN OEUVRE**
NEUES ELEKTROCHEMISCHES VERFAHREN ZUR HERSTELLUNG VON WASSERSTOFF UND VORRICHTUNG ZU SEINER DURCHFÜHRUNG
NOVEL ELECTROCHEMICAL METHOD FOR PRODUCING HYDROGEN, AND DEVICE FOR IMPLEMENTING SAME

(30) Priorité: 23.12.2008 FR 0859023
(43) Date de publication de la demande: 26.10.2011
(73) Titulaire: Institute National Polytechnique de Toulouse, 31029 Toulouse Cedex 4 (FR)
(72) Inventeur: BASSEGUY, Régine, F-31810 Venerque (FR); BERGEL, Alain, F-31500 Toulouse (FR); ERABLE, Benjamin, F-17390 La Tremblade (FR); ETCHEVERRY, Luc, F-31450 Montlaur (FR); DA SILVA, Serge, F-66100 Perpignan (FR)
(74) Mandataire: Jacobson, Claude
(86) Numéro de dépôt international: PCT/FR2009/052679
(87) Numéro de publication internationale: WO 2010/072982

(56) Documents cités:
- FR-A1- 2 904 330
- HONG LIU ET AL.: "Electrochemically assisted microbial production of hydrogen from acetate" ENVIRONMENTAL SCIENCE & TECHNOLOGY, vol. 39, no. 11, 22 avril 2005 (2005-04-22), pages 4317-4320, XP002570379 cité dans la demande
- CESAR I. TORRES, ANDREW KATO MARKUS, BRUCE E. RITTMANN: "Kinetics of consumption of fermentation products by anode-respiring bacteria" APPLIED MICROBIOLOGY AND BIOTECHNOLOGY, vol. 77, no. 3, 2 octobre 2007 (2007-10-02), pages 689-697, XP002526783

## Description

Dans le domaine de l'énergie, la prise en compte de l'augmentation des besoins, de la sécurité d'approvisionnement, des risques environnementaux nécessite de développer des recherches toujours plus poussées sur la diversification et l'utilisation optimale des ressources primaires (fossiles, nucléaire, renouvelables ...).

L'hydrogène, qui permet de stocker et de distribuer de façon souple l'énergie tout en étant peu polluant, pourrait constituer un vecteur pour l'alimentation en énergie des différents secteurs d'activités.

Elément le plus abondant de notre planète, l'hydrogène n'est cependant pas directement disponible dans la nature. Pour être économiquement et écologiquement viable, l'utilisation massive d'hydrogène comme source d'énergie (thermique et électrique) repose sur le développement de toutes les étapes de la filière allant de la production à l'utilisation finale, en passant par le stockage et la distribution.

Au niveau de la production, trois critères doivent être respectés :
- la compétitivité : les coûts d'investissement et de production ne doivent pas être trop élevés ;
- le rendement énergétique : la consommation en énergie pour la production doit être limitée ;
- la propreté : le procédé ne doit pas être polluant pour garder l'un des atouts majeurs de l'hydrogène.

Actuellement, 95 % de l'hydrogène (utilisé essentiellement dans l'industrie chimique et pétrochimique) est produit par reformage à partir des combustibles fossiles. Ce procédé ne répond pas à tous les critères : le coût de revient est trois fois supérieur à celui du gaz naturel et il y a émission de « mauvais » CO₂ issu de composés fossiles. Les autres procédés sont liés à la décomposition, thermochimique ou électrochimique, de l'eau et à la production directe à partir de la biomasse. L'hydrogène peut aussi être obtenu comme un sous-produit d'unités de craquage, de vapocraquage, de reformage catalytique, d'électrolyse de saumures, de cokéfaction.

Aujourd'hui, la production d'hydrogène par voie électrochimique (électrolyse de l'eau) représente 4% de la production totale (Alain Damien, *Hydrogène par électrolyse de l'eau,* Techniques de l'Ingénieur, traité Génie des Procédés, J6 366) et est principalement conduite suivant deux techniques :
- à pression atmosphérique suivie d'une compression nécessaire pour le stockage et le transport ;
- à une haute pression : inférieure ou égale à 30 bars pour les appareils industriels et pouvant dépasser 10 bars sur certains modèles destinés aux sous-marins.

L'électrolyse de l'eau en milieu alcalin (essentiellement hydroxyde de potassium en concentration de 25% à 40% en masse) profite d'une longue expérience. Son développement repose sur la mise au point de nouveaux matériaux répondant à plusieurs critères : résistance à la corrosion dans ce milieu alcalin et catalyse des réactions d'électrodes (forte densité de courant et faible surtension). Au niveau de la cathode, les dépôts à base de Nickel sur une base fer sont les plus utilisés. Actuellement de nouvelles recherche sont menées pour montrer que des matériaux de moins haute qualité peuvent être utilisés comme cathode et permettre de diminuer les coûts d'investissement (Marcelo et al., International Journal of Hydrogen Energy 33(2008) 3041-3044 ; Olivares-Ramirez et al., International Journal of Hydrogen Energy 32(2007) 3170-3173). Au niveau de l'anode : la base doit être plus noble (acier nickelé ou nickel massif) et le dépôt de catalyseur demeure encore un point délicat faisant l'objet de nombreuses recherches.

L'application industrielle de l'électrolyse en milieu acide porte sur la production de faibles quantités d'hydrogène très pur pour les laboratoires. La principale caractéristique réside dans l'emploi d'une membrane cationique (type Nafion) et de catalyseurs à base de métaux précieux pour la cathode (noir de platine) et l'anode.

L'électrolyse de l'eau utilisant la technologie PEM (Proton Exchange Membrane) se développe également et est réalisée en alimentant l'anode en eau pure: afin d'augmenter le rendement énergétique, des catalyseurs métalliques (Pt, Pd) sont utilisés sous la forme de dépôts sur les faces de la membrane.

Des travaux sont également menés pour réaliser l'électrolyse de la vapeur d'eau. L'électrolyse à haute température est plus efficace que le procédé à température ambiante puisqu'une partie de l'énergie nécessaire à la réaction est apportée *via* la chaleur, moins chère à obtenir que l'électricité.

L'électrolyse de l'eau est un procédé électrolytique qui décompose l'eau en oxygène et hydrogène gazeux avec l'aide d'un courant électrique. A la cathode, se produit une réaction de réduction avec production de dihydrogène gazeux selon la réaction : 2H⁺ + 2e⁻ → H₂ gaz. A l'anode, se produit une réaction d'oxydation : 2H₂O → O₂ gaz + 4H⁺ + 4e. La réaction globale est :

2H₂O → O₂ + 2H₂.

Ainsi, le potentiel aux bornes d'une cellule électrochimique réalisant l'électrolyse de l'eau ne peut être inférieur à la valeur thermodynamique 1,23 volts à température et pression standard lorsque les solutions anodique et cathodique sont au même pH.

La rentabilité économique est liée au coût de l'électricité nécessaire. 80% du prix de l'hydrogène produit par voie électrochimique est dû à la consommation électrique. Il est donc souhaitable de diminuer la consommation énergétique du procédé électrochimique tout en diminuant l'agressivité des milieux utilisés (la potasse à 25-30% correspond à un pH de 15 environ) pour un fonctionnement en conditions douces de pH au voisinage de la neutralité.

La demande FR 2 904 330 décrit un dispositif de l'électrolyse de l'eau et son utilisation pour produire de l'hydrogène, ledit dispositif comprenant un compartiment anodique et cathodique, tel que ledit compartiment cathodique a un milieu électrolytique comprenant au moins un acide faible apte à catalyser la réduction et une solution électrolytique dont le pH est compris entre 4 et 9.

Néanmoins, ce dispositif ne permet pas d'abaisser suffisamment le potentiel et donc la consommation d'électricité nécessaire.

Torres et al. (Applied Microbiology and biotechnology 77, 3, 2007, 689-697) décrit des dispositifs d'électrolyse présentant une cathode en graphite uniquement ; or de telles cathodes en graphite ne présentent pas des caractéristiques optimales pour la production d'hydrogène par réduction de l'eau.

Les microorganismes peuvent adhérer spontanément sur tous types de surfaces et former des films appelés biofilms constitués desdits microorganismes, d'une matrice de substances exopolymériques (polysaccharides, protéines, macromolécules...) qu'ils excrètent, de substances produites par les métabolismes microbiens et de composés accumulés provenant du milieu ou issus de la dégradation de la surface support. Il a été découvert récemment que les biofilms développés sur des surfaces conductrices sont capables d'utiliser ces surfaces pour évacuer les électrons issus de leur métabolisme (D. R. Bond et al., Science 295 (2002) 483, et L. M. Tender et al., Nature Biotechnology 20 (2002) 821 ; H. J. Kim et al., Enzyme and Microbial Technology 30 (2002) 145).

D'autres biofilms ont été démontrés capables de catalyser la réduction de l'oxygène sur des matériaux comme les aciers inoxydables (A. Bergel et al., Electrochemistry Communications, 2005, 7, 900-904 ; FR 02 10009) qui, sous leur état initial dépourvu de biofilm, ne sont pas connus pour assurer des vitesses élevées de réduction de l'oxygène. Ces biofilms peuvent être mis à profit pour évacuer de la surface colonisée les électrons du système vers un composé dissous, l'oxygène par exemple.

Qu'ils soient capables de catalyser des réactions électrochimiques d'oxydation ou de réduction, ces biofilms seront appelés dans la suite biofilms électrochimiquement actifs ou biofilms EA.

Ces technologies ont essentiellement été développées pour des piles, c'est-à-dire pour produire de l'électricité.

Récemment, ces piles microbiennes ont été utilisées pour assister la production d'hydrogène à partir de la fermentation de matières organiques, telles que le glucose (Liu et al., Environ. Sci. Technol. 2005, 39, 4317-4320 ; Call et al. Environ Sci. Technol. 2008, 42, 3401-3406 ; Rozendal et al., International Journal of Hydrogen Energy 31 (2006) 1632-1640).

Néanmoins, ces technologies utilisent toutes du platine, notamment sous forme de dépôt sur une base carbone ou Ti avec une charge de 0,35 à 5 mg Pt/cm² à la cathode pour catalyser la réduction de l'eau. En raison du coût associé, ces systèmes ne peuvent être envisagés que pour des utilisations bien spécifiques, par exemple lorsque lorsqu'un gaz hydrogène très pur est désiré.

Les présents inventeurs ont désormais mis au point un nouveau dispositif électrolytique comprenant une cathode réalisée dans un matériau non noble, un acide faible en tant que catalyseur de la réduction de l'eau et une bioanode en matériau non noble. De façon inattendue, le dispositif ainsi généré permet de potentialiser la synthèse de l'hydrogène et de diminuer la consommation électrique à des niveaux bien inférieurs aux technologies existantes.

Selon un premier objet, la présente invention concerne donc un dispositif d'électrolyse amélioré destiné à produire de l'hydrogène par un procédé électrochimique, par utilisation conjointe d'une bioanode et de catalyse cathodique par des acides faibles.

Ainsi, le dispositif selon l'invention comprend :
- une cathode immergée dans une solution électrolytique comprenant au moins un acide faible et dont le pH est compris entre 4 et 9 ;
- une anode immergée dans une solution électrolytique apte à former un biofilm électrochimiquement actif à la surface de l'anode, et comprenant au moins un composé organique biodégradable et apte à être oxydé à l'anode.

L'anode avec le biofilm EA formé à sa surface et/ou dans la solution électrolytique apte à former un biofilm EA est ici désignée par le terme « bioanode » ou anode microbienne.

Le dispositif selon l'invention comprend également les modes de réalisation préférentiels suivants, ainsi que l'une quelconque de leurs combinaisons :
- Ladite solution électrolytique dans laquelle est immergée la cathode et ladite solution électrolytique dans laquelle est immergée l'anode peuvent être identiques ou distinctes. Ainsi, lorsqu'elles sont identiques, le dispositif est composé d'un seul compartiment ; lorsqu'elles sont distinctes (par exemple en cas de pH différent), le dispositif est composé de deux compartiments, l'un anodique comprenant ladite solution électrolytique anodique dans laquelle est immergée l'anode, et l'autre cathodique, comprenant ladite solution électrolytique cathodique dans laquelle est immergée la cathode, lesdits compartiments anodique et cathodique étant alors séparés par un élément séparateur permettant la migration des ions entre lesdits compartiments anodique et cathodique.
- Le matériau de l'anode est choisi parmi tout matériau conducteur sur lequel les biofilms peuvent se former, tel que notamment le carbone, graphite, acier inox, nickel, platine, DSA..., et qui peut éventuellement être modifié par dépôt catalytique habituellement utilisé pour améliorer la conductivité (platine, palladium, etc.).
- La cathode est en matériau conducteur ou comprend un tel matériau conducteur, notamment au moins sa surface est en ou comprend un tel matériau conducteur. Ce matériau est choisi parmi tout matériau conducteur, de préférence distinct du carbone et de toutes ses formes, notamment choisi dans le groupe constitué par les formes oxydées ou non du Fe, Cr, Ni ou Mo, et leurs différents alliages, notamment l'acier inoxydable, notamment, les aciers 304L, 316L, 254 SMO. On entend par acier inoxydable les alliages comprenant le fer, nickel et chrome comprenant plus de 12% de chrome, notamment choisis parmi (analyse chimique en % pondérale) :
   - 304L : C : 0,02 %, Cr : 17 à 19 %, Ni : 9 à 11 %;
   - 316L : C : 0,02 %, Cr : 16-18 %, Ni : 11-13 %, Mo (molybdène) : 2 %,
   - 430 : C : 0,08 %, Cr : 16-18 %,
   - 409 : C : 0,06 %, Cr : 11-13 %, Ti (titane),
   - 254 SMO, etc...
- Ladite solution électrolytique dans laquelle est immergée la cathode contient au moins un acide faible apte à catalyser la réduction. De préférence, le pH est ainsi compris entre 7 et 8,5, plus préférentiellement environ 8 ;
- A titre d'acides faibles, on préfère ceux présentant la forme acide au pH choisi de la solution dans laquelle plonge la cathode ; on peut notamment citer les différentes espèces acido-basiques du phosphate, telles que l'acide orthophosphorique, le dihydrogénophosphate, l'hydrogéno-phosphate, l'acide lactique, l'acide gluconique et/ou leurs mélanges. On préfère notamment le dihydrogénophosphate ou l'hydrogénophosphate, et plus préférentiellement le dihydrogénophosphate ou un mélange hydrogénophosphate / dihydrogéno-phosphate;
- La concentration dudit acide faible peut être comprise entre 0,1 et la solubilité dudit acide faible dans la solution électrolytique dans laquelle plonge la cathode. Ainsi dans le cas du dihydrogénophosphate, la concentration est généralement inférieure à 1,5 mole par litre, plus préférentiellement environ 0,5 mole par litre.
- Avantageusement, on utilise un mélange hydrogénophosphate / dihydrogénophosphate pour la réalisation d'un milieu tampon à environ pH 8 ;
- Ladite solution électrolytique dans laquelle plonge l'anode présente généralement un pH compris entre 4 et 9 ; préférentiellement, le pH de la solution électrolytique dans laquelle plonge l'anode est identique à celui de la solution électrolytique dans laquelle plonge la cathode, plus préférentiellement le pH est neutre, compris entre 6 et 8.
- Les réactions à l'anode et à la cathode peuvent être réalisées à pH proche ; préférentiellement environ égal à 7 ; aussi, on peut s'affranchir d'élément séparateur entre les deux compartiments. Néanmoins, si nécessaire, un tel élément séparateur peut séparer les deux compartiments ; ledit élément séparateur peut alors être un pont électrochimique connu de l'homme du métier, telle qu'une membrane échangeuse de protons (PEM), une membrane cationique, une céramique, une membrane d'Ultrafiltration (UF), membrane échangeuse d'anions (AEM), une membrane bipolaire, ou encore un simple séparateur polymérique ou toute autre séparation permettant la conduction ionique connue de l'homme de l'art; On peut ainsi citer à titre illustratif les membranes commerciales Nafion® 117 ou 1135, ou CM1-7000S.
- Ladite solution électrolytique dans laquelle plonge l'anode comprend avantageusement un ou plusieurs microorganismes ou des consortia de microorganismes issus de milieux naturels (effluents aqueux, boues, compost, sédiments...), connus pour former des biofilms EA à la surface de l'anode (Du et al, Biotechnology Advances 25 (2007), pp. 464-482, Rozendal et al, Trends in Biotechnology 26 (2008), pp. 450-459); il en est ainsi, par exemple, des microorganismes présents dans les sédiments marins. De façon originale, aucune cellule d'électrolyse n'avait encore mise en oeuvre des sédiments marins à titre de solution électrolytique à l'anode pour la production de dihydrogène. Ces bioanodes marines présentent deux avantages: i) elles permettent de travailler à de fortes salinités, ce qui est très bénéfique car la résistance interne de l'électrolyseur est ainsi diminuée (les anodes formées à partir d'effluents sont connues pour ne pas accepter de fortes salinités, ce qui augmente la résistance interne des cellules) et ii) le fait de travailler à des salinités élevées pourrait permettre de réduire les réactions parasites de méthanogénèse, notamment puisque les microorganismes produisant du méthane n'apprécient pas les fortes salinités.
- Ladite solution électrolytique dans laquelle plonge l'anode contient avantageusement des sédiments marins, et est préférentiellement de l'eau de mer ou une solution électrolytique de salinité similaire ;
- A titre de composé organique biodégradable apte à être oxydé à l'anode, on peut citer tout composé organique, naturel ou de synthèse, dérivé de la biomasse par exemple ou à titre illustratif tel que l'acide acétique ou un acétate, tel que l'acétate de sodium, Le terme biodégradable indique que le composé organique est apte à être transformé par les microorganismes. Avantageusement, le composé organique peut être choisi parmi les acides faibles décrits plus haut.

Le dispositif selon l'invention associant la catalyse de la réduction de l'eau par les acides faibles, une réaction anodique d'oxydation de matières organiques par des microorganismes permet d'obtenir un potentiel théorique de la cellule électrolyse de 0,11 volts à pH 7, dans le cas de l'acétate, et donc bien plus faible que le potentiel de 1,23 V requis par l'électrolyse de l'eau.

Ledit dispositif peut notamment être un électrolyseur.

Ledit dispositif peut revêtir des géométries diverses, en fonction notamment de la taille de l'installation. La géométrie du dispositif n'est pas critique et peut être optimisée par l'homme du métier selon des techniques connues en soi.

Généralement, les compartiments anodique et cathodique sont séparés par une ou plusieurs membrane(s), mitoyenne(s), assurant le passage des ions entre les deux solutions électrolytiques. Ainsi, on peut citer le mode de réalisation selon lequel le compartiment cathodique est un tube plongeant dans la solution électrolytique du compartiment anodique et où une ou plusieurs membrane(s) est(sont) agencée(s) soit dans la base du tube cathodique, et/ou dans les parois latérales du tube cathodique immergées dans la solution électrolytique du compartiment anodique. Les designs 1 et 2 des exemples qui suivent illustrent ces modes de réalisation.

Avantageusement, la forme et la structure du système selon l'invention peuvent être conçues de façon à créer les surfaces d'échange les plus importantes possibles pour chacune des zones fonctionnelles. On peut notamment citer des structures poreuses, de type mousses ou feutres, et tout type de structure à grande surface spécifique ou haut degré de vide connu dans l'état de l'art. De même, les formes de type hélice, dendrites, grilles, etc. qui accroissent la surface de chaque élément pour un volume donné peuvent être favorables à son efficacité. La forme peut également être conçue en corrélation avec l'hydrodynamique du milieu pour les environnements liquides circulant ou agités. La géométrie de l'anode pourra être optimisée en fonction des contraintes connues des catalyses électro-microbiennes, en particulier pour favoriser l'adhésion des cellules bactériennes et le transfert électronique entre ces cellules et l'électrode. La cathode pourra être optimisée pour favoriser le dégagement gazeux et l'évacuation rapide des bulles. Sur ce point on pourra tirer parti des différentes technologies développées pour le design d'électrode à dégagement gazeux.

Ledit dispositif peut également comprendre, en outre, tout élément habituellement utilisé dans les installations d'électrolyse de l'eau en milieu alcalin, comme par exemple des moyens pour recueillir l'hydrogène ainsi formé tels que un débitmètre, une vanne, un compresseur et/ou une ou plusieurs électrode(s) de référence telle(s) que l'électrode au calomel saturée (ECS), ampéromètres, voltmètres, un générateur de tension ou de courant, etc.

Le(s)dit(s) microorganisme(s) formant un biofilm EA à la surface de l'anode peuvent exister spontanément dans la solution électrolytique de l'anode. Alternativement ou cumulativement, il peut être envisagé d'ensemencer la solution électrolytique avec des microorganisme(s) adapté(s) sous toutes formes possibles (inocula, bouillons de culture, lyophilisats, etc.). Pour cela, on peut utiliser comme inoculum des échantillons de milieux connus pour contenir des micro-organismes formant facilement des biofilms EA, tels que des boues d'effluents aqueux (stations d'épuration par exemple), des sédiments ou des biofilms par exemple marins, des composts, des cultures pures de microorganismes ou tout autre milieu connu par l'homme de l'art pour donner des biofilms EA. On pourra tirer avantage à ensemencer avec des échantillons de biofilms EA précédemment collectés sur des anodes de tout système mettant en oeuvre des biofilms EA, tel que des piles à combustible microbiennes par exemple. Il est en effet connu que les biofilms EA constituent de bons inocula pour reformer des biofilms EA. Les premiers repiquages assurent souvent une augmentation significative de l'activité catalytique. On pourra aussi utiliser des cultures pures de micro-organismes connus pour leur capacité à former des biofilms EA, tels que *Geobacter, Desulfuromonas, Shewanella, Geopsychrobacter, Rhodoferrax, Geothrix,* etc., et toute souche EA connue dans l'état de l'art.

L'ensemencement avec un ou plusieurs inoculum peut être effectué au début de la mise en fonction du dispositif, il peut aussi éventuellement être renouvelé en cours de fonctionnement pour réactiver le dispositif, par exemple pour pallier une diminution de son efficacité ou après un incident de fonctionnement.

La présente invention concerne également le procédé électrochimique de production d'hydrogène, au moyen du dispositif selon l'invention. Ainsi, le procédé comprend le passage d'un courant dans un dispositif selon l'invention, tel que l'anode et la cathode sont reliées aux deux bornes opposées d'une source de courant ou de potentiel. A cet effet, on pourra utiliser tout dispositif qui permet de délivrer un courant ou de maintenir une différence de potentiel, par exemple un potentiostat, une alimentation stabilisée ou un panneau photovoltaïque. Généralement, la gamme de potentiel est comprise entre 0,1-5V, notamment entre 0,2 et 2 V.

L'intensité dépend notamment de la production désirée et de la surface des électrodes.

Ledit procédé peut être mis en oeuvre dans une grande gamme de conditions opératoires de température ou de pression ; on préfère notamment opérer à température comprise entre la température ambiante et 80°C et à pression comprise entre la pression atmosphérique et 30 bars.

L'eau utilisée pour la solution électrolytique cathodique ne doit pas nécessairement obéir à des critères de pureté particuliers ; ainsi, l'eau de la solution électrolytique peut être de l'eau de mer ou de l'eau distillée, dès lors que l'acide faible utilisé et éventuellement des ions électrolytes-supports (tels que KCI, NaCl, etc...) sont en quantité suffisante pour assurer la conductivité du milieu réactionnel.

Le procédé selon l'invention peut également comprendre l'étape préliminaire de polarisation par passage d'un courant imposé ou maintien d'une tension de l'une et/ou l'autre des électrodes à un potentiel imposé, correspondant au potentiel thermodynamique théorique de la réaction d'oxydation et/ou réduction à initier.

Là encore, ces éléments sont à la portée de l'homme du métier.

La présente invention concerne également une installation, notamment pour la production d'hydrogène, comprenant un dispositif selon l'invention.

La présente invention, permettant la production d'hydrogène par voie électrochimique à basse température se distingue donc par :
- une faible consommation électrique,
- un fonctionnement dans des conditions de pH plus douces qu'avec l'utilisation de potasse (procédé industriel actuel),
- l'utilisation d'un catalyseur homogène (acides faibles) de la réaction cathodique qui permet le remplacement des métaux nobles habituellement utilisés pour la cathode (Pt, Ni utilisés dans les procédés actuels) par des métaux moins nobles tels que les aciers, et
- l'utilisation de la biomasse pour abaisser le potentiel de la réaction anodique.

D'autres objets, caractéristiques et avantages de l'invention apparaîtront mieux à la lecture de la description qui suit, donnée à titre illustratif et non limitatif.

### FIGURES

La figure 1 représente schématiquement un dispositif selon l'invention où (1) représente le compartiment cathodique, (2) représente une membrane perméable, (3) représente l'anode, (4) représente un dispositif pour mesurer le débit d'hydrogène formé et (5) représente une vanne.
La figure 2 représente la production d'hydrogène en fonction de la tension aux bornes de la cellule d'électrolyse (design 1)
La figure 3 représente les courbes de polarisation tracées à partir des résultats obtenus lors de la polarisation des électrodes avec Ecell variant de 0 à 2V. Pour chaque Ecell, on obtient un courant; de plus le potentiel cathodique est mesuré par rapport à une électrode de référence, le potentiel anodique est alors déduit (Ecell-Ecath).
La figure 4a représente la consommation énergétique en fonction de la capacité de production pour les dispositifs selon l'invention et ceux de l'art antérieur.
La figure 4b est un zoom de la figure 4a pour les faibles productions.

### EXEMPLES

### 1. Le montage expérimental

Les expériences ont été réalisées dans un réacteur électrochimique comportant deux compartiments distincts décrits ci-dessous :

### Compartiment cathodique où a lieu la production d'hydrogène

Tube en plexiglas de 6 cm de diamètre avec une hauteur de liquide de 30 cm, soit un volume cathodique de 0,85 L. La cathode est constituée de deux plaques d'acier inoxydable 254 SMO correspondant à une surface géométrique totale de 50 cm², elle est plongée dans le milieu cathodique composé de tampon phosphate (0,5M pH 8).

Deux designs de compartiment ont été testés :
Design 1 : une membrane (Nafion® 117) est fixée au fond du tube définissant une surface d'échange de 28 cm² (diamètre : 6 cm).
Design 2 : une membrane (CM1-7000S- Membranes International INC USA) est fixée dans 3 fenêtres rectangulaires (20 x 1,5 cm²) creusées en périphérie du bas du tube définissant une surface totale d'échange de 90 cm² (20*1,5 cm).

L'extrémité supérieure du tube est fermée hermétiquement et le gaz produit est recueilli via un débitmètre à bulle pour évaluer la production d'hydrogène.

### Compartiment anodique où a lieu l'oxydation de l'acétate catalysée par un biofilm marin EA

Tube en plexiglas de 20 cm de diamètre avec une hauteur de liquide de 80 cm, soit un volume anodique de 25 L.

L'anode est un feutre de carbone (carbone Lorraine) de surface géométrique 2500 cm² (1/4 m²) plongé dans de l'eau de mer naturelle (pH 7) dans laquelle a été dissous de l'acétate de sodium (2 g/L)

La bioanode de ce compartiment a été préparée en utilisant un inoculum composé de biofilm marin récolté à La Tremblade (Océan Atlantique). L'électrode en carbone a été polarisée à -0,2 V/ECS pendant 15 jours durant lesquels le courant a fortement augmenté (jusqu'à 0,4 A/m²) démontrant l'efficacité de la bioanode pour l'oxydation de l'acétate.

L'extrémité du compartiment cathodique comportant la membrane est plongée dans le compartiment anodique. Une différence de potentiel, désignée par Ecell (potentiel aux bornes de la cellule d'électrolyse), est imposée entre les deux électrodes par l'intermédiaire d'un potentiostat (VMP2 de Biologic) ou d'un panneau solaire couplé à une résistance de valeur variable et le courant débité est mesuré. Une électrode de référence, plongée dans le compartiment cathodique, est également utilisée pour suivre les performances des deux électrodes (mesure du potentiel de la cathode et déduction de celui de l'anode).

### 2. Les résultats design 1 + potentiostat

Les résultats obtenus avec le compartiment cathodique selon le design 1, c'est-à-dire une membrane au fond du tube cathodique sont regroupés dans le tableau 1.

**Tableau 1: design 1**

| Ecell (V) | I en mA | Densité de courant (A/m²) | Production d'H₂ (mUh) | Rendement faradique | Consommation énergétique kWh/m³ H₂ | Consommation énergétique kWh/Nm³ H₂ |
|---|---|---|---|---|---|---|
| 0,0 | 0,0 | 0,0 | 0 | - | - | - |
| 0,2 | 2,5 | 0,5 | Visible | - | - | - |
| 0,4 | 5,0 | 1,0 | Visible | - | - | - |
| 0,6 | 14,0 | 2,8 | 4,8 | 74 | 1,8 | 1,9 |
| 0,8 | 29,0 | 5,8 | 11,4 | 85 | 2,0 | 2,3 |
| **1,0** | **44,0** | **8,8** | **19,8/9,9*** | **97** | **2,2** | **2,5** |
| 1,2 | 59,0 | 11,8 | 31,2 | 114 | 2,3 | 2,5 |
| 1,4 | 75,0 | 15,0 | 42,0 | 121 | 2,5 | 2,8 |
| 1,6 | 91,0 | 18,2 | 49,2 | 117 | 3,0 | 3,3 |
| 1,8 | 107,0 | 21,4 | 54,6 | 110 | 3,5 | 3,9 |
| 2,0 | 125,0 | 25,0 | 60,0 | 104 | 4,2 | 4,6 |

| | | | | | | |
|---|---|---|---|---|---|---|
| *valeur pour une surface ramenée à 25 cm² | | | | | | |

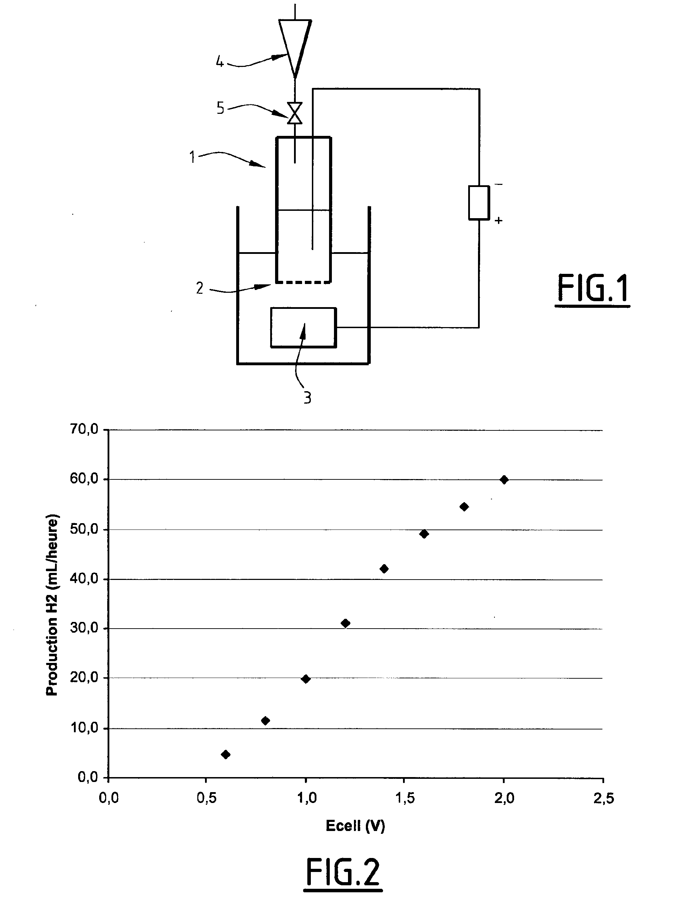

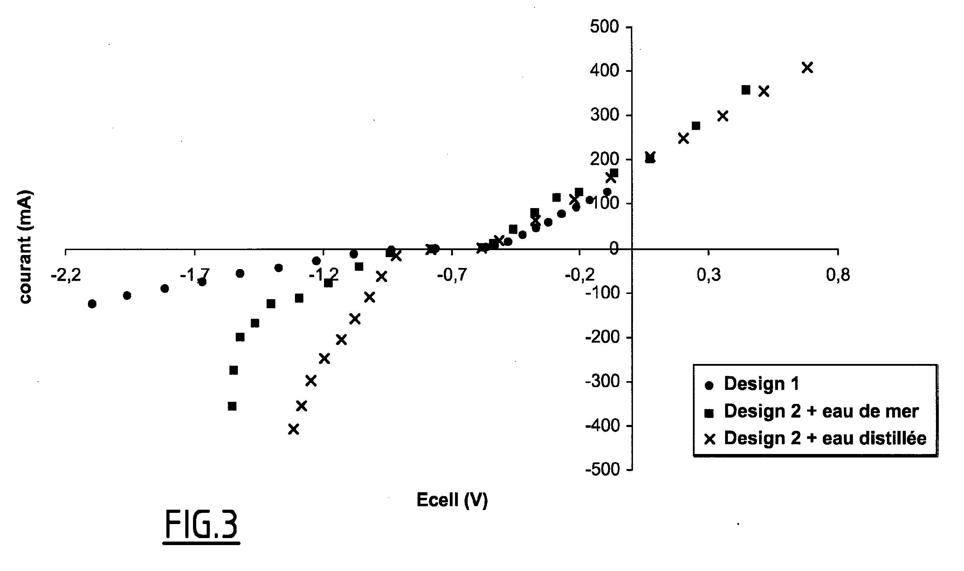

La figure 2 représente la production d'hydrogène en fonction du potentiel aux bornes de la cellule d'électrolyse (Ecell). Enfin, les courbes de polarisation ont été tracées pour observer les performances individuelles de chacune des électrodes (figure 3).

Ces premiers résultats montrent qu'il est possible de produire de l'hydrogène dans une cellule électrochimique en appliquant des potentiels entre la cathode et l'anode très faibles et cela dans un milieu à pH neutre (7-8): un courant est détecté pour un potentiel de 0,2V pour lequel un faible dégagement gazeux est observé. Ensuite, lorsque le potentiel de la cellule augmente (tableau 1 et figure 2), la production d'hydrogène augmente.

A titre comparatif, pour une production de l'ordre de 20 mUh (correspondant à 10 mL/h pour une surface ramenée à 25 cm²) soit un courant débité de 8,8 A/m² , , il faut un potentiel de cellule de 1,0V, alors qu'il fallait 1,90V pour un fonctionnement en milieu potasse concentrée et 1,67V pour une cellule d'électrolyse comportant un compartiment cathodique contenant du phosphate (0,5M) et un compartiment anodique contenant de la potasse concentrée (tel que décrit dans FR 2 904 330 (tableau 4)).

On observe donc une diminution de plus de 40 % du potentiel nécessaire, soit une diminution de 49 % de la consommation en électricité par rapport au fonctionnement en milieu potasse, 40% par rapport au système phosphate à la cathode combinée à la potasse à l'anode.

Au cours des essais, le potentiel de la cathode varie de -0,76 à -2,09 V/ECS tandis que le potentiel de l'anode varie de -0,56 à -0,09 V/ECS lorsque le courant débité passe de 2,5 à 125mA (figure 3) : l'évolution du potentiel de l'anode montre que cette bioanode est capable de fournir beaucoup de courant et n'est pas le facteur limitant. Coté cathodique, le potentiel s'étend sur une plus grande gamme, et le rendement faradique est plus faible aux plus faibles Ecell et atteint (voire dépasse) les 100 % pour Ecell supérieur ou égale à 1,2V. En fait pour Ecell inférieur à 1,2V, le courant est relativement faible et la part du courant résiduel (que l'on obtiendrait sans phosphate en solution) sur le courant total est plus importante. Les rendements supérieurs à 100^{%} peuvent peut-être s'expliquer par une diffusion dans le compartiment cathodique du dioxyde de carbone formé à l'anode lors de l'oxydation de l'acétate, qui peut notamment diminuer la pureté de l'hydrogène recueilli ou modifier la composition du gaz recueilli.

### 3. Les résultats design 2 + potentiostat

Les résultats obtenus avec le compartiment cathodique selon le design 2, c'est-à-dire une membrane collée sur trois fenêtres au bas du tube cathodique sont regroupés dans les tableaux 2 et 3 : deux solutions cathodiques ont été testées, l'une constituée d'eau de mer + phosphate (0,5M, pH 8) et l'autre constituée de phosphate (0,5M, pH 8) dissous dans de l'eau distillée. Par rapport aux résultats obtenus avec le design 1, les courants délivrés pour un potentiel de cellule donné sont encore plus élevés avec ce nouveau design (cf. tableaux et courbes de polarisation figure 3) : une production de respectivement 3,6 et 7,4 ml/h en eau de mer et eau distillée est obtenue dès un potentiel de cellule de 0,4V. Sur les courbes de polarisation (figure 3), on peut remarquer que les courbes anodiques sont très semblables et que la modification de design a surtout des conséquences sur la branche cathodique : la plus grande surface de membrane permet une meilleure répartition des lignes de champs et donc une augmentation de la surface active de la cathode. Par ailleurs, la modification du milieu cathodique (eau de mer ou eau distillée) entraîne des différences importantes : l'augmentation de la conductivité est bien loin d'avoir l'effet escompté - moins de pertes par chute ohmique, donc efficacité de production accrue - au contraire, il semblerait que les nombreux constituants de l'eau de mer sont un frein à la réduction des atomes d'hydrogène des espèces phosphates et donc à la production d'hydrogène (compétition adsorption/réaction). On peut également penser à la pollution de la membrane par les ions Na+ qui bloqueraient les sites d'échanges ionique de la membrane et induirait une chute ohmique diminuant les performances du système.

**Tableau 2 : design 2 eau de mer**

| Ecell (V) | I en mA | Densité de courant (A/m²) | Production d'H₂ (mL/h)* | Consommatio n énergétique kWh/m³ de H₂ | Consommation énergétique kWh/Nm³ de H₂ |
|---|---|---|---|---|---|
| 0,0 | 0,0 | 0,0 | 0,0 | - | - |
| 0,2 | 1,5 | 0,3 | visible | - | - |
| 0,4 | 10,5 | 2,1 | 3,6 | 1,2 | 1,3 |
| 0,6 | 43,0 | 8,6 | 19,4 | 1,3 | 1,5 |
| 0,8 | 80,0 | 16,0 | 37,1 | 1,7 | 1,9 |
| 1,0 | 115,0 | 23,0 | 53,3 | 2,2 | 2,4 |
| 1,2 | 125,0 | 25,0 | 58,0 | 2,6 | 2,9 |
| 1,4 | 170,0 | 34,0 | 78,8 | 3,0 | 3,4 |
| 1,6 | 200,0 | 40,0 | 92,7 | 3,5 | 3,8 |
| 1,8 | 276,0 | 55,2 | 128,0 | 3,9 | 4,3 |
| 2,0 | 358,0 | 71,6 | 166,0 | 4,3 | 4,8 |

| | | | | | |
|---|---|---|---|---|---|
| *Evaluée à partir des mesures obtenues avec le design 1 pour I<80mA, pour I>80mA, rendement faradique pris égal à 100%. | | | | | |

**Tableau 3 : design 2 eau distillée**

| Ecell (V) | I en mA | Densité de courant (A/m²) | Production d'H₂ (mL/h)* | Consommation énergétique kWh/m³ de H₂ | Consommation énergétique kWh/Nm³ de H₂ |
|---|---|---|---|---|---|
| 0,0 | 0,0 | 0,0 | 0 | - | - |
| 0,2 | 1,5 | 0,3 | Visible | - | - |
| 0,4 | 16,0 | 3,2 | 7,4 | 1,2 | 1,3 |
| 0,6 | 63,0 | 12,6 | 29,2 | 1,1 | 1,3 |
| 0,8 | 112,0 | 22,4 | 51,9 | 1,7 | 1,9 |
| 1,0 | 160,0 | 32,0 | 74,2 | 2,2 | 2,4 |
| 1,2 | 207,0 | 41,4 | 96,0 | 2,6 | 2,9 |
| 1,4 | 250,0 | 50,0 | 115,9 | 3,0 | 3,4 |
| 1,6 | 302,0 | 60,4 | 140,0 | 3,5 | 3,8 |
| 1,8 | 357,0 | 71,4 | 165,6 | 3,9 | 4,3 |
| 2,0 | 410,0 | 82,0 | 190,1 | 4,3 | 4,8 |

| | | | | | |
|---|---|---|---|---|---|
| *Evaluée à partir des mesures obtenues avec le design 1 pour I<80mA, pour I>80mA, rendement faradique pris égal à 100%. | | | | | |

### 4. Les résultats design 2 + couplage énergie renouvelable

Enfin, des essais ont été réalisés en couplant le réacteur muni du compartiment cathodique de design 2 (eau distillée + phosphate 0,5M pH8, cathode de 25 cm² de surface géométrique) avec un panneau photovoltaïque. La tension délivrée par le panneau à la cellule électrochimique a été régulée par l'introduction dans le circuit d'une résistance variable (1 à 10 Ω).

Les résultats, regroupés dans le tableau 4, sont de loin les meilleurs en termes de production : 11 mL/h d'hydrogène sont produits avec une tension de cellule de 0,4V (ligne en gras) soit une diminution de 0,6V du potentiel nécessaire par rapport au design 1 qui, rappelons-le, permettait déjà de diviser par 1,7 (et plus) le potentiel nécessaire lors de l'électrolyse en milieu potasse ou potasse+phosphate cathodique.

**Tableau 4 : design 2 + photovoltaïque**

| Ecell (V) | I en mA | Densité de courant (A/m²) | Production d'H₂ (mL/h)* | Consommation énergétique kWh/m³ de H₂ | Consommation énergétique kWh/Nm³ de H₂ |
|---|---|---|---|---|---|
| 0,00 | 0 | 0,0 | 0,0 | - | - |
| **0,41** | **27** | **10,8** | **10,6** | **1,0** | **1,2** |
| 0,81 | 111 | 44,4 | 51,5 | 1,7 | 1,9 |
| 1,12 | 166 | 66,4 | 77,0 | 2,4 | 2,7 |
| 1,73 | 383 | 153,2 | 177,6 | 3,7 | 4,1 |
| 2,20 | 530 | 212,0 | 245,8 | 4,7 | 5,3 |

### 5. Résultats comparatifs

En termes de consommation énergétique par Nm³ d'hydrogène produit (N=Normal conditions=273 K), le gain est très important. Pour une production de l'ordre de 10-11 mUh sur une cathode en acier inoxydable (surface géométrique 25 cm²), on obtient l'ordre suivant, du plus consommateur au moins énergivore (synthèse des tableaux 1 à 4):
Technique industrielle actuelle :
   Cathodique potasse pH15 et anodique potasse pH15 : 4,9 kWh/Nm³H₂
FR2 904 330 :
   Cathodique phosphate (0,5M, pH8) et anodique potasse pH15 : 4,3 kWh/Nm³ H₂.
Dispositif selon l'invention :
   - Cathodique phosphate (0,5M, pH8) et anodique bio design 1 pH7 :
      2,5 kWh/Nm³ H₂ (tient compte de la surface géométrique de 50 cm²)
   - Cathodique phosphate (0,5M, pH8) et anodique bio design 2 pH7 :
      1,2 kWh/Nm³ H₂

Le dispositif selon l'invention permet d'abattre la consommation énergétique de plus de 49% (design 1) et de 75% (design 2) par rapport à la technique industrielle et de 40% (design 1) et de 72% (design 2) par rapport à FR 2904330.

Le dispositif selon l'invention a également été comparé aux technologies de production d'hydrogène à partir de matières organiques, utilisant une cathode en matériau noble, telles que décrites par Liu et al., Environ. Sci. Technol. 2005, 39, 4317-4320 ; Call et al., Environ Sci. Technol. 2008, 42, 3401-3406 ; Rozendal et al., International Journal of Hydrogen Energy 31 (2006) 1632-1640.

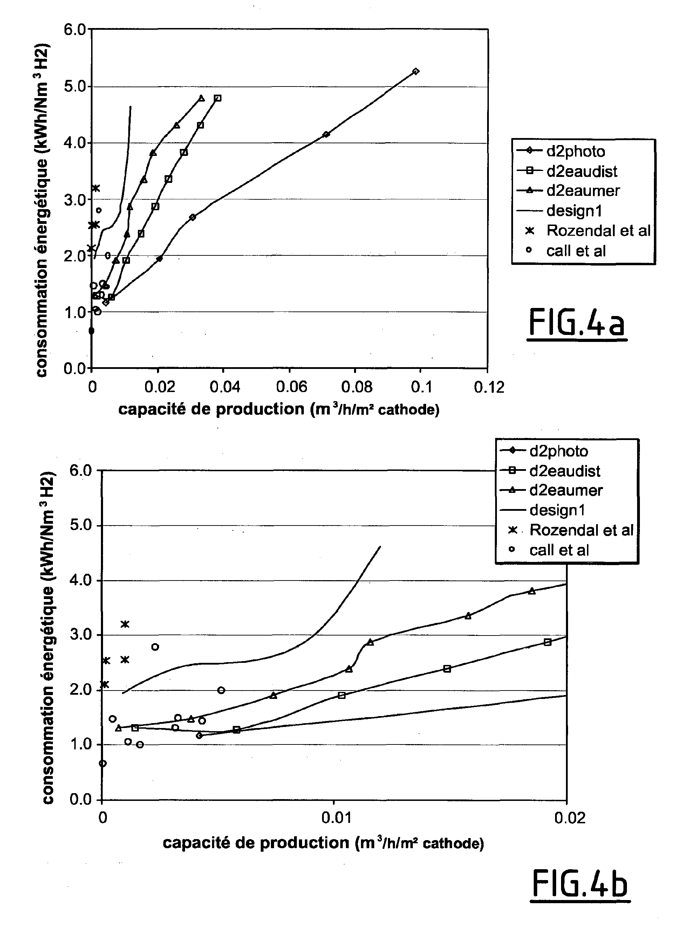

Il ressort que :
- pour un même potentiel de cellule sur une gamme allant de 0 à 1,2V, les productions d'hydrogène reportées par ces auteurs sont toutes inférieures à celles obtenues selon l'invention. Par ailleurs, selon l'invention le système permet d'atteindre des vitesses de production de l'ordre de 0,1 m³/h/m² de cathode, donc bien plus importantes que celles reportées qui sont toutes inférieures à 0,005 m³/h/m² de cathode (voir figures 4a et 4b). De plus, pour produire 0,1 m³/h/m², la consommation énergétique selon l'invention est de l'ordre de 5 kWh/Nm³ d'H₂. Dans les conditions en milieu potasse concentrée, cette consommation correspond à une vitesse de production par unité de surface 20 fois plus faible.
- Par ailleurs, pour la production la plus élevée reportée dans la littérature (5,2 10⁻³m³/h/m², voir Call et al., *supra),* la consommation énergétique est de 2 kWh/Nm³ d'H₂ ; elle passe à 1,3 kWh/Nm³ d'H₂ en utilisant le dispositif selon l'invention (cathode d'acier et concentration de phosphate de 0,5M) soit une diminution de 35 %.

Ce dernier résultat est à comparer à la diminution de 13 % (4,3 vs 4,9 kWh/Nm³ d'H₂) obtenue avec la substitution par la cathode d'acier et la présence d'acide faible seules.

Ce résultat démontre bien la synergie de la bioanode combinée à la catalyse d'acide faible à la cathode.
- Enfin, ces auteurs travaillent avec une cathode contenant du platine contrairement au dispositif selon l'invention qui met en oeuvre des cathodes en acier inoxydable, matériau industriel par excellence.

## Revendications

1. Dispositif d'électrolyse comprenant :
- une cathode immergée dans une solution électrolytique comprenant au moins un acide faible et dont le pH est compris entre 4 et 9 ;
- une anode immergée dans une solution électrolytique apte à former un biofilm électrochimiquement actif à la surface de l'anode, et comprenant au moins un composé organique biodégradable et apte à être oxydé à l'anode,
tel que la cathode est ou comprend un matériau choisi parmi les formes oxydées ou non du Fe, Cr, Ni ou Mo, et leurs différents alliages, notamment l'acier inoxydable, notamment, les aciers 304L, 316L, 254 SMO.

2. Dispositif selon la revendication 1, dans lequel ladite solution électrolytique dans laquelle est immergée la cathode et ladite solution électrolytique dans laquelle est immergée l'anode sont identiques.

3. Dispositif selon la revendication 1 ou 2, dans lequel ladite solution électrolytique dans laquelle est immergée la cathode comprenant au moins un acide faible a un pH compris entre 7 et 8,5.

4. Dispositif selon l'une quelconque des revendications 1 à 3, dans lequel ladite solution électrolytique dans laquelle est immergée l'anode comprend un ou plusieurs microorganismes ou des consortia de microorganismes issus de milieux naturels, connus pour former des biofilms électrochimiquement actifs à la surface de l'anode.

5. Dispositif selon la revendication 4, dans lequel ledit ou lesdits microorganismes est/sont ensemencé(s) dans ladite solution d'électrolyte.

6. Dispositif selon la revendication 5, dans lequel ledit ensemencement est réalisé par ajout d'un ou plusieurs inoculum choisi parmi les boues d'effluents aqueux, les sédiments marins, les biofilms, les composts ou les cultures pures de microorganisme.

7. Dispositif selon l'une quelconque des revendications 1 à 6, dans lequel la solution électrolytique dans laquelle est immergée l'anode contient des sédiments marins ou contient une concentration saline, similaire à celle de l'eau de mer.

8. Dispositif selon l'une quelconque des revendications 1 à 7, dans lequel ledit acide faible est choisi parmi un ou plusieurs acides du groupe comprenant l'acide orthophosphorique, l'hydrogénophosphate, le dihydrogénophosphate, l'acide lactique, l'acide gluconique et/ou leurs mélanges.

9. Dispositif selon l'une quelconque des revendications 1 à 8, dans lequel la concentration dudit acide faible est comprise entre 0,1 mole par litre et la solubilité dudit acide dans la solution électrolytique dans laquelle est immergée la cathode.

10. Dispositif selon l'une quelconque des revendications 1, 3 à 9, tel que ladite solution électrolytique dans laquelle est immergée la cathode et ladite solution électrolytique dans laquelle est immergée l'anode sont distinctes et séparées par un élément séparateur entre les compartiments anodique et cathodique permettant la migration des ions entre lesdits compartiments.

11. Dispositif selon l'une quelconque des revendications précédentes, dans lequel le composé organique apte à être oxydé est choisi parmi le groupe comprenant l'acide acétique ou un acétate.

12. Dispositif selon l'une quelconque des revendications 1 à 11, comprenant un ou des moyen(s) pour recueillir l'hydrogène formé.

13. Procédé électrochimique de synthèse d'hydrogène comprenant la mise en oeuvre d'un dispositif selon l'une quelconque des revendications précédentes dans lequel l'anode et la cathode sont reliées à deux bornes opposées d'une source de courant ou de potentiel.

14. Procédé selon la revendication 13, dans lequel dans lequel l'une et/ou l'autre des électrodes est (sont) préalablement polarisée(s).

15. Installation comprenant un dispositif selon l'une quelconque des revendications 1 à 12.

## Patentansprüche

1. Elektrolysevorrichtung, umfassend:
- eine Kathode, die in eine Elektrolytlösung eingetaucht ist, die mindestens eine schwache Säure umfasst und deren pH-Wert zwischen 4 und 9 liegt;
- eine Anode, die in eine Elektrolytlösung eingetaucht ist, die geeignet ist, einen elektrochemisch aktiven Biofilm an der Oberfläche der Anode zu bilden, und die mindestens eine bioabbaubare organische Verbindung umfasst und geeignet ist, an der Anode oxidiert zu werden,
der Art, dass die Kathode aus einem Material hergestellt ist oder dieses umfasst, das ausgewählt ist aus den oxidierten oder nichtoxidierten Formen des Fe, Cr, Ni oder Mo und ihren unterschiedlichen Legierungen, insbesondere nichtrostendem Stahl, insbesondere den 304L-, 316L-, 254 SMO-Stählen.

2. Vorrichtung nach Anspruch 1, bei der die Elektrolytlösung, in die die Kathode eingetaucht ist, und die Elektrolytlösung, in die die Anode eingetaucht ist, identisch sind.

3. Vorrichtung nach Anspruch 1 oder 2, bei der die Elektrolytlösung, in die die Kathode eingetaucht ist und die mindestens eine schwache Säure umfasst, einen pH-Wert zwischen 7 und 8,5 aufweist.

4. Vorrichtung nach einem beliebigen der Ansprüche 1 bis 3, bei der die Elektrolytlösung, in die die Anode eingetaucht ist, einen oder mehrere aus natürlichen Lebensräumen stammende Mikroorganismen oder Konsortien von Mikroorganismen umfasst, die dafür bekannt sind, dass sie elektrochemisch aktive Biofilme an der Oberfläche der Anode zu bilden.

5. Vorrichtung nach Anspruch 4, bei der der oder die Mikroorganismen in die Elektrolytlösung eingeimpft ist/sind.

6. Vorrichtung nach Anspruch 5, bei der das Impfen durch Hinzufügen eines Inoculums oder mehrerer Inocula realisiert wird, die aus wässrigen Abwässerschlämmen, Meeressedimenten, Biofilmen, Kompost oder reinen Mikroorganismenkulturen gewählt sind.

7. Vorrichtung nach einem beliebigen der Ansprüche 1 bis 6, bei der die Elektrolytlösung, in die die Anode getaucht ist, Meersedimente enthält oder eine Salzkonzentration ähnlich der des Meerwassers enthält.

8. Vorrichtung nach einem beliebigen der Ansprüche 1 bis 7, bei der die schwache Säure ausgewählt ist aus einer oder mehreren Säuren der Gruppe, die Orthophosphorsäure, Hydrogenphosphat, Dihydrogenphosphat, Milchsäure, Gluconsäure und/oder ihre Mischungen umfasst.

9. Vorrichtung nach einem beliebigen der Ansprüche 1 bis 8, bei der die Konzentration der schwachen Säure zwischen 0,1 Mol pro Liter und der Löslichkeit der Säure in der Elektrolytlösung liegt, in die die Kathode eingetaucht ist.

10. Vorrichtung nach einem beliebigen der Ansprüche 1, 3 bis 9, der Art, dass die Elektrolytlösung, in die die Kathode eingetaucht ist, und die Elektrolytlösung, in die die Anode eingetaucht ist, unterschiedlich sind und durch ein Trennelement zwischen der Anodenkammer und der Kathodenkammer getrennt sind, das die Migration der Ionen zwischen den Kammern erlaubt.

11. Vorrichtung nach einem beliebigen der vorhergehenden Ansprüche, bei der die organische Verbindung, die geeignet ist, oxidiert zu werden, ausgewählt ist aus der Gruppe, die Essigsäure oder ein Acetat umfasst.

12. Vorrichtung nach einem beliebigen der Ansprüche 1 bis 11, ein oder mehrere Mittel zum Sammeln des gebildeten Wasserstoffs umfassend.

13. Elektrochemisches Verfahren der Synthese von Wasserstoff, das die Anwendung einer Vorrichtung nach einem beliebigen der vorhergehenden Ansprüche umfasst, bei dem die Anode und die Kathode an zwei entgegengesetzte Anschlüsse einer Strom- oder Potentialquelle angeschlossen sind.

14. Verfahren nach Anspruch 13, bei dem die eine und/oder die andere Elektrode vorher polarisiert wird (werden).

15. Anlage, eine Vorrichtung nach einem beliebigen der Ansprüche 1 bis 12 umfassend.

## Claims

1. An electrolysis device comprising:
- a cathode immersed in an electrolytic solution comprising at least one weak acid and the pH of which is comprised between 4 and 9;
- an anode immersed in an electrolytic solution capable of forming an electrochemically active biofilm at the surface of the anode, and comprising at least one biodegradable organic compound capable of being oxidized at the anode,
such that the cathode is or comprises a material selected from either oxidized forms or not of Fe, Cr, Ni or Mo, and their different alloys, notably stainless steel, notably 304L, 316L, 254 SMO steels.

2. The device according to claim 1, wherein said electrolytic solution in which the cathode is immersed and said electrolytic solution in which the anode is immersed, are identical.

3. The device according to claim 1 or 2, wherein said electrolytic solution in which the cathode is immersed, comprises at least one weak acid with a pH comprised between 7 and 8.5.

4. The device according to any of claims 1 to 3, wherein said electrolytic solution in which the anode is immersed, comprises one or several micro-organisms or consortia of micro -organisms stemming from natural media, known to form electrochemically active biofilms at the surface of the anode.

5. The device according to claim 4, wherein said micro-organism(s) is/are sown in said electrolyte solution.

6. The device according to claim 5, wherein said sowing is achieved by adding one or more innocula selected from muds of water effluents, marine sediments, biofilms, composts or pure micro-organism cultures.

7. The device according to any of claims 1 to 6, wherein the electrolytic solution in which the anode is immersed, contains marine sediments or contains a saline concentration, similar to that of seawater.

8. The device according to any of claims 1 to 7, wherein said weak acid is selected from one or more acids from the group comprising orthophosphoric acid, hydrogenphosphate, dihydrogenphosphate, lactic acid, gluconic acid and/or mixtures thereof.

9. The device according to any of claims 1 to 8, wherein the concentration of the weak acid is comprised between 0.1 mole per liter and the solubility of said acid in the electrolytic solution in which the cathode is immersed.

10. The device according to any of claims 1, 3 to 9, such that said electrolytic solution in which the cathode is immersed and said electrolytic solution in which the anode is immersed, are distinct and separated by a separator element between the anodic and cathodic compartments allowing migration of the ions between said compartments.

11. The device according to anyone of the preceding claims, wherein the organic compound capable of being oxidized is selected from the group comprising acetic acid or an acetate.

12. The device according to any of claims 1 to 11, comprising a means or means for collecting the hydrogen formed.

13. An electrochemical method for the synthesis of hydrogen comprising the application of a device according to any of the preceding claims wherein the anode and the cathode are connected to two opposite terminals of a current or potential source.

14. The method according to claim 13, wherein either one or both of the electrodes are biased beforehand.

15. An installation comprising a device according to any of claims 1 to 12.
